# EUROPÄISCHE PATENTSCHRIFT

(11) **EP 1 152 916 B1**
(45) Veröffentlichungstag und Bekanntmachung des Hinweises auf die Patenterteilung: **17.11.2004**
(21) Anmeldenummer: 00993311.0
(22) Anmeldetag: 25.11.2000
(51) Int. Cl.: B60N 2/02, B60N 2/18, B60N 2/427

(54) **EINRICHTUNG UND VERFAHREN ZUR VERSTELLUNG VON SITZEN IN FAHRZEUGEN**
DEVICE AND METHOD FOR ADJUSTING SEATS IN VEHICLES
PROCEDE ET DISPOSITIF POUR DEPLACER DES SIEGES DANS DES VEHICULES

(30) Priorität: 09.12.1999 DE 19959411
(43) Veröffentlichungstag der Anmeldung: 14.11.2001
(73) Patentinhaber: ROBERT BOSCH GMBH, 70442 Stuttgart (DE)
(72) Erfinder: URSEL, Eckhard, 77815 Buehl (DE); GENTER, Gerhard, 77855 Achern (DE); WINTER, Manfred, 77839 Lichtenau (DE); HAUSSECKER, Walter, 77830 Buehlertal (DE); SCHILLER, Herbert, 77830 Buehlertal (DE); MAENNLE, Erik, 77704 Oberkirch (DE); HARTZ, Guenter, 77830 Bühlertal (DE); WOLF, Joerg, 76139 Karlsruhe (DE); PROHASKA, Werner, 77833 Ottersweier (DE); STEUER, Martin, 77830 Buehlertal (DE); LINDE, Hansjuergen, 96450 Coburg (DE); NEUMANN, Uwe, 96050 Bamberg (DE); REHKLAU, Andreas, 96450 Coburg (DE); SCHEER, Dieter, 54439 Fisch (DE)
(74) Vertreter: Hörschler, Wolfram Johannes, Dipl.-Ing.
(86) Internationale Anmeldenummer: PCT/DE2000/004210
(87) Internationale Veröffentlichungsnummer: WO 2001/042040

(56) Entgegenhaltungen:
- EP-A- 0 401 092
- WO-A-97/48570
- DE-A- 3 129 101
- DE-U- 29 815 521
- US-A- 5 586 740

## Beschreibung

### Technisches Gebiet

Insassen von Kraftfahrzeugen können ihre Sitzposition in diesen generell nur statisch voreinstellen. In der Regel erfolgt während der Fahrt keine Verstellung der Sitzposition, die Sitzposition der Fahrzeuginsassen paßt sich den sich ergebenden Fahrsituationen nicht an.

### Stand der Technik

Bei bisher bekannten und heute üblichen Kraftfahrzeugsystemen wählen die Fahrzeuginsassen vor Beginn der Fahrt die ihnen jeweils günstigste und am komfortabelsten erscheinende Sitzposition im Fahrzeug individuell vor. Während der Fahrt sind die Fahrzeuginsassen generell Schubkräften, resultierend aus der Querbeschleunigung beispielsweise während der Passage von Kurven ausgesetzt. Ferner treten Schubkräfte auf, die aus Brems- und Verzögerungsphasen während der Fahrt des Kraftfahrzeuges resultieren können. Während der Fahrt ergeben sich aufgrund der auftretenden auf die Insassen einwirkenden dynamischen, fahrsituationsabhängigen Kräfte Schubspannungen zwischen den Polstern der Fahrzeugsitze und den Insassen des Fahrzeuges, die den Fahrzeuginsassen durchaus als unangenehm erscheinen können. Insbesondere dann, wenn der Betrag der Schubspannungen den jeweiligen persönlich noch akzeptablen Grenzwert für den Fahrzeuginsassen überschreitet.

Aus der gattungsbildenden EP-A 0 401 092 ist eine Neigungseinrichtung für einen Kraftfahrzeugsitz bekannt, bei der ein Kraftfahrzeugsitz abhängig von der Querbeschleunigung um eine Achse X-X', die auf der in Längsrichtung und senkrecht liegenden Ebene verläuft, geneigt wird.

Ein Kraftfahrzeugsitz mit zueinander bewegbar angeordneten, mittels einer Einstellvorrichtung einstellbaren Sitzkomponenten ist aus WO 97/48570 bekannt. Mittels einer Erfassungseinrichtung wird der Bewegungszustand erfasst und die Einstellvorrichtung veranlasst, über Einzelaktuatoren mindestens eine der Sitzkomponenten derart relativ zu den anderen Sitzkomponenten zu bewegen, dass während des Fahrvorgangs automatisch eine Entlastung des Sitzbenutzers erfolgt.

### Darstellung der Erfindung

Die erfindungsgemäß vorgeschlagene Lösung betrifft eine Einrichtung zur Verstellung eines Fahrzeugsitzes, dessen Rahmenstruktur über Antriebsmotoren mit vorgelagerten Getriebeeinheiten verstellbar ist und der Fahrzeugsitz an zwei parallel zueinander angeordneten Sitzschienen aufgenommen ist, wobei die Rahmenstruktur des Fahrzeugsitzes durch Hubelemente in zwei voneinander getrennten Ebenen sphärisch verstellbar ist und den Hubelementen jeweils zugeordnete Antriebe so ansteuerbar sind, dass ein an der Rahmenstruktur befestigter Sitz den fahrsituationsabhängig auftretenden Kräften entgegenwirkend bewegt wird.

Weiterhin betrifft die erfindungsgemäße Lösung ein Verfahren zur Verstellung der Rahmenstruktur eines Fahrzeugsitzes, wobei die Rahmenstruktur mittels Antriebsmotoren verstellbar ist und Hubelemente, die die Rahmenstruktur des Fahrzeugsitzes aufnehmen und in zwei voneinander getrennten Ebenen sphärisch verstellen, sensorabhängig derart angesteuert werden, dass der Fahrzeugsitz fahrsituationsabhängig auftretenden Kräften entgegenwirkend verstellt wird.

Mittels der erfindungsgemäß vorgeschlagenen Lösung kann der Fahrzeugsitz bei Bremsund Verzögerungsphasen während der Fahrt des Fahrzeuges in seinem vorderen Bereich in Abhängigkeit vom von der Sensorik ermittelten Grad der Verzögerung der auftretenden Kraft entgegenwirkend verstellt werden. Bei in Kurvenfahrten zwangsläufig auftretenden Querbeschleumgungskräften aufgrund der Fliehkraft kann der Fahrzeugsitz durch seine Dreipunktlagerung zum Kurvenmittelpunkt hin um seine Längsachse gekippt werden, um den auftretenden Fliehkräften entgegenzuwirken. So wird beispielsweise bei Rechtskurven das linke Hubelement in Verhältnis zum rechten Hubelement weiter nach oben ausgefahren um eine Verkippung des Fahrzeugsitzes um seine Längsachse herbeizuführen.

Die Hubelemente unterhalb der Rahmenstruktur unterstützen diese nach Art einer Dreipunktlagerung, wobei an der Vorderseite der Rahmenstruktur ein mittig angeordnetes Hubelement vorgesehen ist, und die Verstellung der Rahmenstruktur um die parallel zur Fahrzeugachse orientierte Längsachse des Kraftfahrzeuges durch zwei im hinteren Bereich der Rahmenstruktur angeordnete unabhängig ansteuerbare Hubelemente erfolgen kann.

Zur Aufnahme von plötzlich auftretenden Crashkräften können die Hubelemente mit Raumlenkern miteinander verbunden werden. Durch das Anordnen der Raumlenker unterhalb der den Fahrersitz tragenden Rahmenstruktur läßt sich der Fahrersitz annähernd geradlinig auf- und abwärts bewegen; daneben ist durch die Raumlenkeranordnung eine Drehsicherung des Fahrzeugsitzes in Bezug auf dessen Hochachse gegeben. Die Diagonale der Raumlenker gestattet zudem eine Einleitung der beim Crash auftretenden Kräfte in das Fahrzeugchassis.

Die Hubelemente sind einerseits mit zwischen Antriebsmotor und Antriebsspindeln vorgesehenen selbsthemmenden Getrieben versehen, ferner ist unterhalb der Spindelmutter eine Federelementanordnung vorgesehen. Die Federelemente können parallel geschaltete Schraubenfedern sein oder als Federpakete ausgeführt werden - sie unterstützen die Antriebe der Hubelemente für die Rahmenstruktur während deren aufwärts gerichteter Hubbewegung. Um die Hubbewegung zu ermöglichen, umfassen die Hubelemente teleskopartig ineinander geführte innere und äußere Rohre. Die Rohranordnung umschließt eine durch den Antriebsmotor antreibbare Gewindespindel, deren Spindelmutter in ihrer unteren Position durch die Blocklänge der Federelemente und in ihrer maximal ausgefahrenen Position durch außen am Hubelement vorgesehene Haltegurte begrenzt ist.

Mittels des erfindungsgemäß weiter vorgeschlagenen Verfahrens zur Verstellung der Rahmenstruktur eines Fahrzeugsitzes werden die Hubelemente, die die Rahmenstruktur des Fahrzeugsitzes aufnehmen sensorabhängig derart angesteuert, daß der Fahrzeugsitz während der Fahrt fahrsituationsabhängig auftretenden Kräften entgegenwirkend verstellt wird. Dies kann einerseits durch eine von der Sensorik initiierte Nickbewegung des Fahrzeugsitzes beim Bremsen des Fahrzeuges erfolgen; andererseits kann bei Passage von Kurven der Fahrzeugsitz zum Kurvenmittelpunkt hin um seine Längsachse parallel zur Fahrzeuglängsachse geneigt werden. Neben einer elektrischen Betätigung der Hubelemente der Rahmenstruktur unterhalb des Fahrersitzes können diese auch in das Hydrauliksystem - etwa der Servolenkung - des Fahrzeuges integriert sein.

### Zeichnung

Anhand der Zeichnung wird die Erfindung nachstehend näher erläutert:

Es zeigt:
- Figur 1: die Vorderansicht einer auf drei Hubelementen angeordneten Rahmenstruktur,
- Figur 2: eine perspektivische Draufsicht auf die Dreipunktlagerung der Rahmenstruktur,
- Figur 3: eine Draufsicht auf die Rahmenstruktur mit Raumlenkern,
- Figur 4: die Ansicht der Hubelemente mit angeflanschtem selbsthemmenden Getrieben und Antriebsmotoren,
- Figur 5: die Hubelemente in verschiedenen Betriebspositionen,
- Figur 6: die perspektivische Darstellung eines gabelförmigen Raumlenkers samt Hubelement und
- Figur 7: die schematische Darstellung der Antriebsansteuerungen für mehrere Hubelemente.

### Ausführungsvarianten:

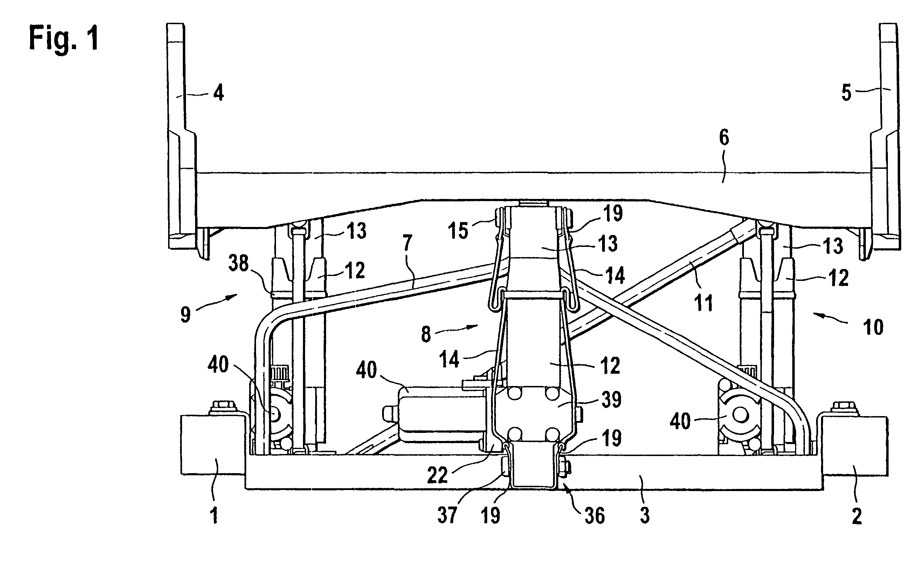

Fig. 1 gibt die Vorderansicht einer auf den Hubelementen abgestützten Rahmenstruktur wieder.

Die Rahmenstrukrur 4, 5, 6 ist aus Seitenteilen 4, 5 gebildet, die miteinander durch die Querstrebe 6 verbunden sind. Mittig unter der Querstrebe 6 befindet sich ein Hubelement 8, welches an einem Profil 3 gelagert ist. Mit dem Profil 3 sind die beiden sich senkrecht zur Zeichenebene erstreckenden Sitzschienen 1, 2 miteinander verbunden. Zwischen dem ersten Hubelement 8 und den beiden hinteren Hubelementen 9, 10 erstreckt sich ein Raumlenker 7, während die beiden im Hintergrund dargestellten Hubelemente 9, 10 mit einem weiteren stangenförmig zwischen diesen verlaufenden Raumlenker 11 verbunden sind. Die Hubelemente 8, 9 und 10 - hier jeweils mit einem elektrischen Antriebsmotor 40 versehen - umfassen teleskopartig ausfahrbare Führungsrohre 12 bzw. 13. Die Führungsrohre 12, 13 sind mit Haltebändern 14 versehen, deren Ösen 19 an einem Bolzen 15 eingehangen sind, um die maximal mögliche Ausfahrposition des inneren Führungsrohres 13 aus dem äußeren Führungsrohr 12 zu begrenzen. Die Haltebänder 14 der Hubelemente 8, 9 und 10 sind jeweils an unteren Haltebandfixierungen 36 an einem Bolzen 37 aufgenommen.

Das vordere Hubelement 8, mittig zur Querstrebe 6 am Vorderteil der Rahmenstruktur 4, 5, 6 angelenkt, ist am Profil 3 gelagert, während die beiden hinteren Hubelemente 9 und 10 an den Sitzschienen 1, 2 aufgenommen sind. Zwischen den hinteren Hubelementen 9, 10 ist der diagonal verlaufende Raumlenker 11 angeordnet, der das Oberteil des Hubelementes 10 mit dem Fuß des Hubelementes 9 verbindet. Jedes der Hubelemente 8, 9 bzw. 10 ist über eine elastisch ausgeformtes Lagerelement 21 - hier jedoch nicht dargestellt - mit der Rahmenstruktur 4, 5 und 6 verbunden.

Eine Nickbewegung der Rahmenstruktur 4, 5 und 6 läßt sich dadurch herbeiführen, daß das innere Führungsrohr 13 des vorderen Hubelementes 8 ausfährt und die Rahmenstruktur 4, 5, 6 senkrecht zur Zeichenebene um die Anlenkpunkte der hinteren Hubelemente 9 bzw. 10 verschwenkt. Bei der Passage einer Kurve während der Fahrt des Fahrzeuges kann das Innenliegende der Hubelemente 9 bzw. 10 abgesenkt und das jeweils äußere der Hubelemente 9, 10 ausgefahren werden, um die Rahmenstruktur 4, 5, 6 samt des an dieser aufgenommenen Fahrersitzes zum Kurvenmittelpunkt hin zu neigen. Um die Neigungsbewegung der Rahmenstruktur 4, 5 und 6 um die Längsachse zu ermöglichen, ist ein Längenausgleich am Raumlenker 11 vorgesehen, etwa in Gestalt einer Teleskopstabführung zwei ineinander geschobener stabförmiger Elemente. Entsprechendes gilt für den Raumlenker 7, der am Bolzen 15 des vorderen Hubelementes 8 befestigt ist und mit seinen beiden hinteren gabelförmigen Enden mit den Sitzschienen 1, 2 derart verschraubt ist, daß eine Nickbewegung der Rahmenstruktur 4, 5 und 6 um die durch die beiden hinteren Hubelemente 9, 10 gebildeten Anlenkpunkte noch möglich ist.

Jedes der Hubelemente 8, 9 und 10 hat einen Hubbereich von etwa 50 mm; unter Berücksichtigung der Anordnung der drei Hubsäulen 8, 9 und 10 zueinander läßt sich die Rahmenstruktur 4, 5 und 6 um etwa 10° nach rechts bzw. nach links verkippen. Der Nickwinkel der Rahmenstruktur 4, 5 und 6 um die hinteren Anlenkpunkte an den Hubelementen 9 und 10, liegt bei 10° nach vom und etwa 10° nach hinten. Mittels der Antriebsmotoren 40, die jeweils am Fuß der Hubelemente 8, 9 und 10 vorgesehen sind und den Getrieben 39 läßt sich - ausgehend von der mittleren Position der Rahmenstruktur 4, 5 und 6 bei etwa 25 mm Ausfahrhöhe und Verstellgeschwindigkeiten von 6,5 mm/s - eine Verstellzeit von 3,85 s realisieren.

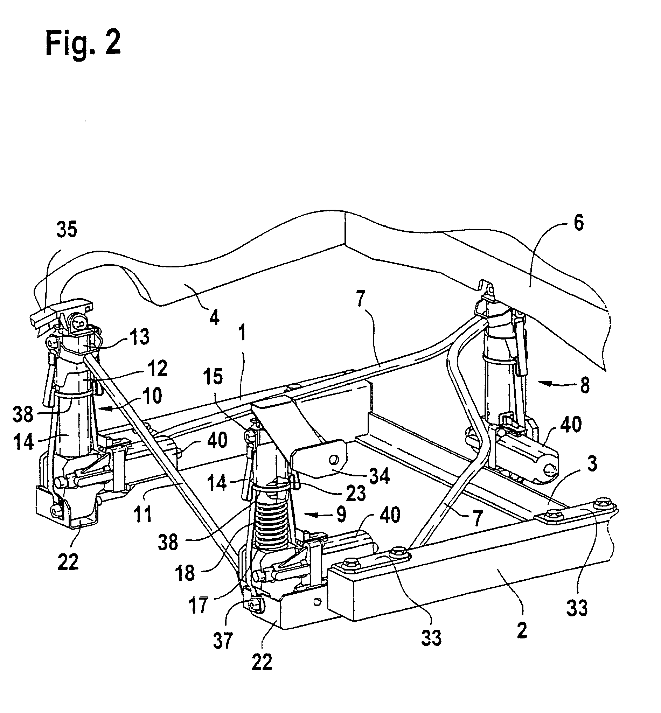

Die Darstellung gemäß Fig. 2 gibt eine perspektivische Draufsicht auf eine Dreipunktlagerung der Rahmenstruktur wieder.

Aus Darstellungsgründen ist eines der Seitenteile 4, 5 fortgelassen, um die dahinterliegenden Baukomponenten nicht zu verdecken. An den beiden hinteren Hubelementen 9, 10 ist jeweils ein Sitzhalter 34, 35 in Form eines abgewinkelten Blechprofiles befestigt, an dem die Seitenteile 4, 5 der zusammenhängenden Rahmenstruktur 4, 5, 6 befestigt sind. Die Querstrebe 6, im vorderen Bereich der Rahmenstruktur 4, 5, 6 angeordnet, ist mittig durch das vordere Hubelement 8 abgestützt, weil dies die Nickbewegung der Rahmenstruktur 4, 5 und 6 um die beiden hinteren Hubelemente 9, 10 ermöglicht. Am teilweise aufgeschnitten dargestellten hinteren Hubelement 9 ist erkennbar, daß dessen Gewindespindel 23 von zwei ineinander geführten, parallel geschalteten Federelementen 17, 18 umschlossen ist, die die Aufwärtsbewegung der entlang der Hubspindel 23 wandernden Gewindemutter 28 unterstützen, welche die Federelemente 17, 18 in ihrer nach unten gestellten Position, auf Blocklänge zusammengedrückt, vorspannt.

Der hier vereinfacht dargestellte Raumlenker 11 ist einerseits am oberen Bolzen 15 des Hubelementes 10 befestigt, andererseits am Motorhalter 22 des Hubelementes 9. Die Hubelemente 8, 9 und 10 sind allesamt mit die Haltebänder 14 einschnürenden Ringen 38 versehen; die Haltebänder 14 sind mittels der Ösen 19 am Bolzen 15 und am Bolzen 37 befestigt und begrenzen die Ausfahrbewegung der inneren Führungsrohre 13 aus den äußeren Führungsrohren 12. Die die Hubelemente 8, 9 und 10 miteinander verbindenden Raumlenker 7, 11 ermöglichen einen abgestimmten geradlinigen Stellbewegungsverlauf der Rahmenstruktur 4, 5, 6 von oben nach unten und umgekehrt. Mittels der Raumlenker 7, 11 können im Falle eines Unfalles auftretende hohe Kräfte in den Unterbau der Fahrzeugkarosserie geleitet werden. Die Raumlenker 7, 11 unterbinden ferner die Verdrehung der Rahmenstruktur 4, 5, 6 um ihre Hochachse und nehmen auftretende Seitenkräfte auf. Zur Versteifung des Unterbaus der Rahmenstruktur 4, 5, 6 sind an den Seitenschienen 1, 2 die Motorhalter 22 durch Befestigungswinkel 33 angeflanscht.

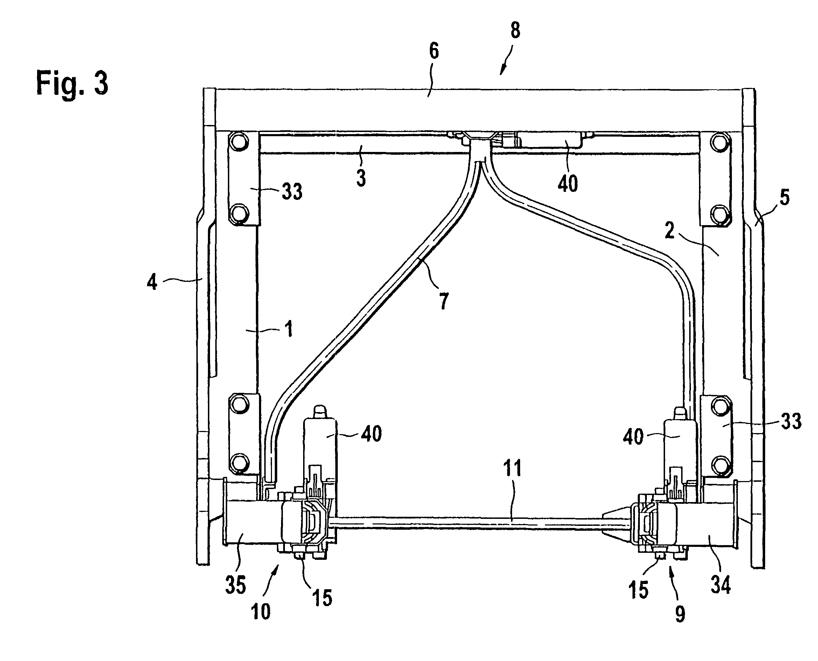

Fig. 3 zeigt die Draufsicht auf die Rahmenstruktur 4, 5 und 6 jeweils an drei Punkten unterstützt durch die Hubelemente 8, 9 und 10.

Aus der Draufsicht geht der Verlauf der Raumlenker 7, 11 zwischen den einzelnen Hubelementen 8, 9 und 10 hervor. Oberhalb der Sitzschienen 1, 2 verbunden durch die Traverse 3, befindet sich die verkipp- und verschwenkbare Rahmenstruktur 4, 5 und 6. Die oberen Enden der hinteren Hubelemente 9 und 10 sind jeweils mit einem Sitzhalter 34, 35 versehen, an denen die Seitenteile 4, 5 zur Aufnahme des Fahrzeugsitzes angeflanscht sind. Jedem der Hubelemente 8, 9 und 10 ist ein eigener Antrieb 40 zugeordnet; die unterhalb der Rahmenstruktur 4, 5, 6 vorgesehenen Sitzschienen 1 und 2 sind über Befestigungswinkel 33 miteinander verschraubt, um die Struktur zu versteifen. Im hinteren Bereich ist an den Sitzschienen 1, 2 der Raumlenker 7 drehbar verschraubt, so daß die Rahmenstruktur 4, 5, 6 Nickbewegungen um ihre hinteren Anlenkpunkte an den hinteren Hubelementen 9 und 10 ausführen kann.

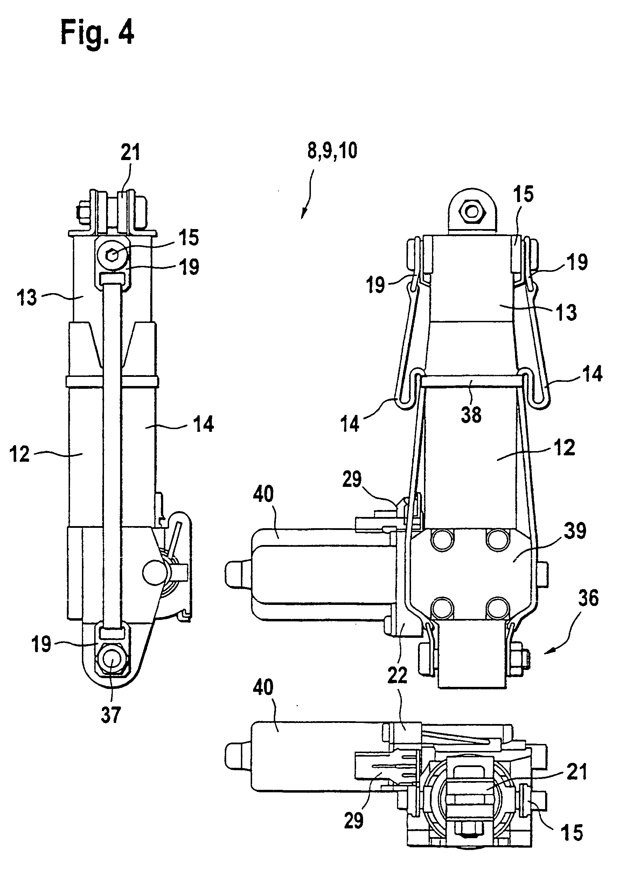

Fig. 4 zeigt eine Mehrseitenansicht der Hubelemente 8, 9 oder 10.

Die Hubelemente 8, 9 oder 10 sind als kompaktbauende Einheiten ausgeführt, die Dank ihrer teleskopartig geführten Rohre 12, 13 einen Stellbereich zwischen 50 mm und 60 mm abdecken können; die die maximale Ausfahrbewegung ermöglichenden Haltebänder 14 sind mit Ösen 19 an den jeweils oben und unten vorgesehenen Bolzen 15, 37 eingehangen. Am oberen Ende des inneren Führungsrohres 13 befindet sich ein elastisches Lagerungselement 21, mit welchem das jeweilige Hubelement 8, 9 oder 10 an der Rahmenstruktur 4, 5, 6 festlegbar ist. Im unteren Bereich der Hubelemente 8, 9 oder 10 ist ein Antriebsmotor 40 über eine Motorhalterung 22 mit einem selbsthemmenden Getriebe 39 verbunden, über welches die im Inneren des Hubelementes 8, 9 oder 10 angeordnete Gewindespindel 23 in Rotation versetzt werden kann. Oberhalb des Antriebsmotors 40 sind dessen elektrische Anschlüsse 29 erkennbar, mit welchem der Antriebsmotor 40 an das 12 V-Bordspannungsversorgungsnetz anschließbar ist.

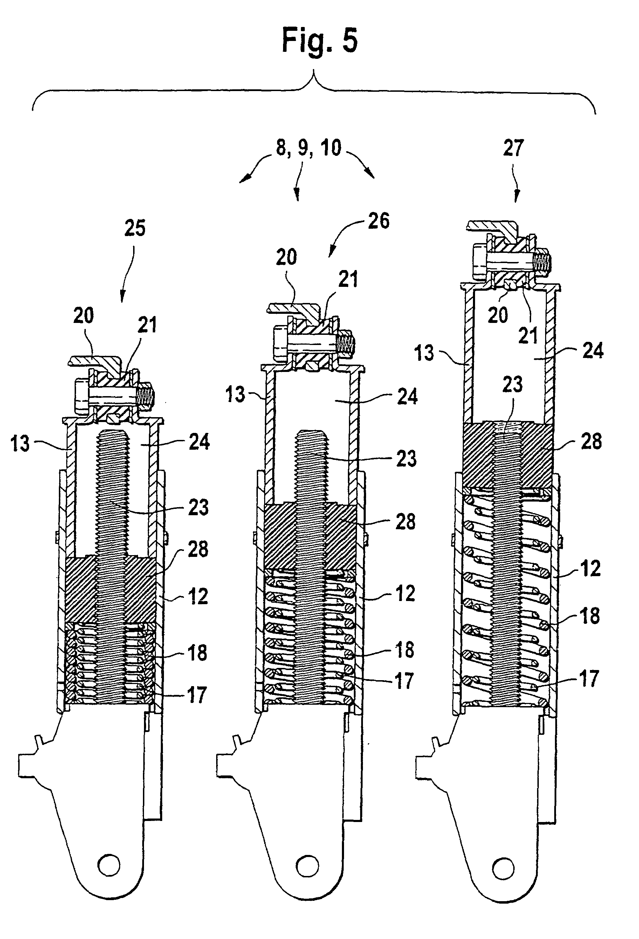

Fig. 5 zeigt die Darstellung von Hubelementen in verschiedenen Betriebspositionen.

Die inneren Führungsrohre 13 der Hubelemente 8, 9 oder 10 umfassen ein oberes, elastisch ausgebildetes Lagerungselement 21, mit dem sie mit der jeweiligen Komponente der Rahmenstruktur 4, 5, 6 verbunden sind. Das Profil 20 sei hier stellvertretend für eine der Komponenten der Rahmenstruktur 4, 5, 6 dargestellt. Das innere Führungsrohr 13 stützt sich auf der Oberseite des als Gewindemutter ausgebildeten Stellblockes 28 ab. Die Gewindespindel 23, die über das vorgelagerte Getriebe 39 und den Antriebsmotor 40 in Rotation versetzt wird, ragt in den Hohlraum 24 im inneren Führungsrohr 13 hinein und ist von unten durch Federelemente 17, 18 beaufschlagt.

In der mit 25 bezeichneten Position ist eines der parallel geschalteten Federelemente 17, 18, die als Schraubenfedern ausgeführt sein können, auf Blocklänge zusammengedrückt und legt somit die untere Position der Hubelemente 8, 9 oder 10 fest. Der Stellblock 28 ist drehgesichert vom äußeren Führungsrohr 12 umschlossen und fährt durch Verdrehung der Gewindespindel 23 beispielsweise in einer mit Position 26 bezeichnete mittlere Betriebsposition. In dieser mittleren Lage 26 ist das Lagerungselement 21 beispielsweise 25 mm aus seiner untersten Lage emporgefahren. Demnach verfügt ein Hubelement 8, 9 oder 10 in Position 26 über einen Verstellbereich von ± 25 mm in beide Richtungen. Die beiden parallel geschalteten Schraubenfedern 17, 18 unterstützen den Stellblock 28 bei dessen Aufwärtsbewegung entlang der Gewindespindel 23. Die maximale Ausfahrposition des inneren Führungsrohres 13 aus dem umschließenden äußeren Führungsrohr 12 wird durch die vollständige Spannung der zwischen den Führungsrohren 12, 13 vorgesehenen Haltebänder 14 begrenzt. In der mit 27 bezeichneten Maximalposition ist der Stellblock 28 in seine Maximalposition entlang der Gewindespindel 23 bewegt und die Federelemente 17, 18 haben ihre entspannte Lage eingenommen. Das parallel geschaltete Federsystem entlastet die Spindelanordnung bei deren Aufwärtsbewegung. Im Falle des vorderen Hubelementes 8 entspricht die Maximalposition 27 einem Verschwenkungswinkel der Fahrersitzfläche von etwa 8°, bezogen auf die hinteren Haltepunkte der Rahmenstruktur 4, 5, 6 an den beiden hinteren Hubelementen 9 und 10. Diese Position kann beispielsweise während der Fahrt durch die Sensorik beim Bremsen oder während Verzögerungsphasen erzeugt werden, um auf die Fahrzeuginsassen einwirkende Verzögerungskräfte abzuschwächen. Gleiches gilt für die hinteren Hubelemente 9, 10 der Rahmenstruktur 4, 5, 6. Durchfährt das Fahrzeug eine Kurve wird beispielsweise das Kurveninnere der Hubelemente 9 oder 10 im hinteren Bereich der Rahmenstruktur 4, 5, 6 in die Position 25 gemäß Fig. 5 bewegt, während das äußere Hubelement 9 oder 10 eine mittlere Position 26 gemäß Fig. 5 einnimmt, wodurch während der Fahrt eine Verkippung der den Fahrersitz aufnehmenden Rahmenstruktur 4, 5, 6 um ihre Längsachse erreicht wird.

Mittels der als Dreipunktlagerung konfigurierten Abstützung der Rahmenstruktur 4, 5, 6 läßt sich eine sphärische Verstellung des Fahrzeugsitzes während der Fahrt erzielen, die fahrsituationsabhängig durch die Sensorik detektiert erfolgt, um die sich zwischen der Sitzoberfläche und den Fahrzeugsinsassen einstellende Schubspannungen herabsetzt.

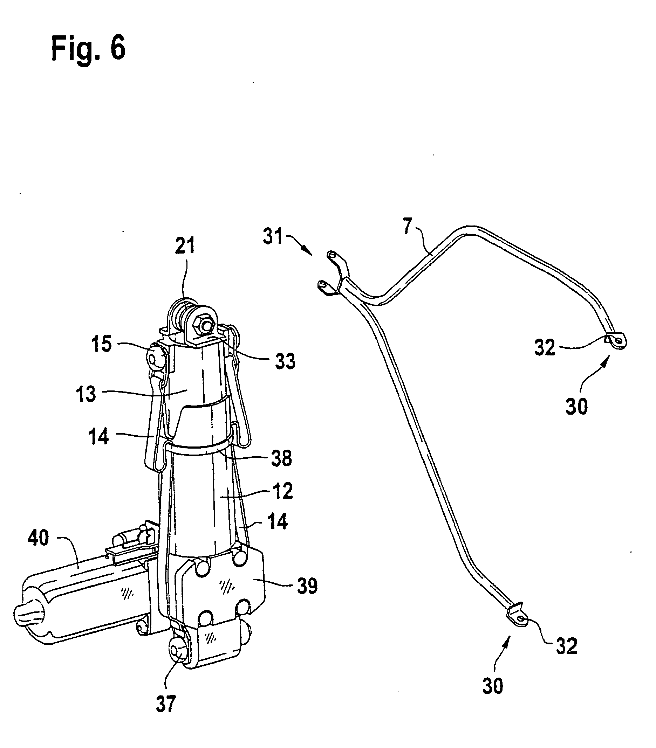

Fig. 6 zeigt eine perspektivische Darstellung von Hubelement und geteiltem Raumlenker.

Das Hubelement 8, 9 oder 10 weist auf der Oberseite seines inneren Führungsrohres 13 ein zwischen zwei Befestigungswinkeln aufgenommenes elastisches Lagerungselement 21 auf. Am Hubelement 8, 9 oder 10 sind die Bolzen 15, 37 zu erkennen, in welchen die Haltebänder 14 mit ihren endseitig vorgesehenen Ösen eingehangen sind, ferner der die Spindelbewegung erzeugende elektrische Antrieb 40. Anstelle eines elektrischen Antriebes 40 ließen sich die Hubelemente 8, 9 oder 10 auch in das Hydrauliksystem solcher Kraftfahrzeuge integrieren, die mit Servolenkung ausgerüstet sind. Mit einer solchen Ausführungsvariante ließe sich beispielsweise eine Kurvenneigung der Fahrzeugsitze an die Lenkbewegungen koppeln.

In Fig. 6 ist die Konfiguration des Raumlenkers 7 gezeigt, der mit seiner Lagerungsgabel 31 am vorderen Hubelement 8 befestigt ist und mit dem an seinen Enden vorgesehenen Winkelstücken 30 an der Sitzschiene 1, 2 verschraubt wird. Die Verbindung des Raumlenkers 7 mit den Sitzschienen 1, 2 erfolgt derart, daß der Raumlenker 7 der Nickbewegung der Rahmenstruktur 4, 5, 6 um die hinteren Anlenkpunkte an den Hubelementen 9, 10 der Rahmenstruktur 4, 5, 6 folgt, das heißt, er ist an den jeweiligen Sitzschienen 1, 2 drehbar gelagert.

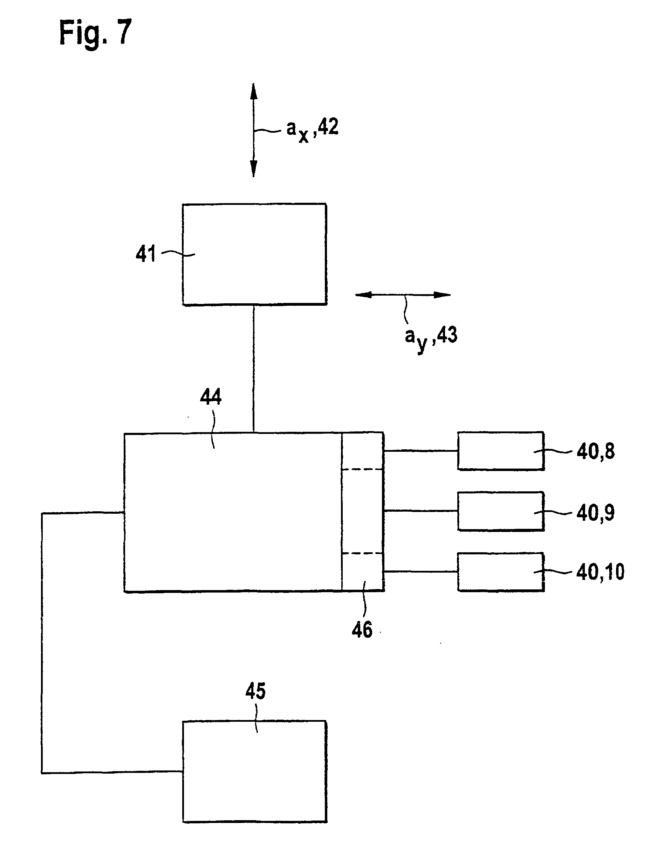

Fig. 7 zeigt die Ansteuerung der elektrischen Antriebsmotoren 40 in stark vereinfachter Form.

Die hier für die drei Motoren 40 dargestellte Variante ist bei einer Lagerung der Rahmenstruktur 4, 5 und 6 an drei Punkten vorgesehen. Die jedem der Hubelemente 8, 9 bzw. 10 jeweils zugeordneten Antriebe werden in Abhängigkeit von den gemessenen Beschleunigungen aₓ und a_{y} gemäß der Fahrsituation angesteuert. Dazu kann ein zweiachsiger Beschleunigungssensor 41 Verwendung finden, der eine erste Beschleunigungsachse 42 für die Messung der Beschleunigung aₓ in X-Richtung, beim Beschleunigen oder Verzögern des Fahrzeuges enthält. In einer weiteren Achse 43 wird die Kurvenbeschleunigung a_{y} ermittelt.

Die Werte der Beschleunigungen aₓ, a_{y} werden an das Steuergerät 44 übermittelt, mit welchem die Antriebsmotoren 40 der Elemente 8, 9, und 10 jeweils entsprechend der durch die Beschleunigungsmessungen ermittelnde Fahrsituation angesteuert werden. Das Steuergerät kann in vorteilhafter Weise mit Halbleiterendstufen 46 versehen sein, mit denen eine jeweils drehzahlgeregelte Ansteuerung erfolgen kann. Ferner steht das Steuergerät 44 mit einem Bedienteil 45 in Verbindung.

### Bezugszeichenliste

- 1: Sitzschiene
- 2: Sitzschiene
- 3: Traverse
- 4: Seitenteil
- 5: Seitenteil
- 6: Querstrebe
- 7: Raumlenker
- 8: Hubelement, vorne
- 9: Hubelement, hinten
- 10: Hubelement, hinten
- 11: Raumlenker
- 12: Führungsrohr, außen
- 13: Führungsrohr, innen
- 14: Halteband
- 15: Bolzen
- 16: Spindelmutter
- 17: innere Feder
- 18: äußere Feder
- 19: Öse
- 20: Profil
- 21: elastisches Lagerelement
- 22: Motorhalter
- 23: Gewindespindel
- 24: Hohlraum
- 25: Blocklängeposition
- 26: ausgefahrene Position
- 27: Maximalposition
- 28: Stellblock
- 29: elektrischer Anschluß
- 30: Winkelstück
- 31: Lagergabel
- 32: Bohrung
- 33: Befestigungswinkel
- 34: Sitzhalter
- 35: Sitzhalter
- 36: untere Haltebandfixierung
- 37: Bolzen
- 38: Ring
- 39: Getriebe
- 40: Antriebsmotor
- 41: Beschleunigungssensor
- 42: Beschleunigung aₓ
- 43: Kurvenbeschleunigung a_{y}
- 44: Steuergerät
- 45: Bedienteil
- 46: Halbleiterendstufe

## Patentansprüche

1. Einrichtung zur Verstellung eines Fahrzeugsitzes, dessen Rahmenstruktur (4, 5, 6) über Antriebsmotoren (40) mit vorgelagerten Getriebeeinheiten (39) verstellbar ist und der Fahrzeugsitz an zwei parallel zueinander angeordneten Sitzschienen (1, 2) aufgenommen ist, **dadurch gekennzeichnet, daß** die Rahmenstruktur (4, 5, 6) des Fahrzeugsitzes durch Hubelemente (8, 9, 10) in zwei voneinander getrennten Ebenen sphärisch verstellbar ist, wobei den Hubelementen (8, 9, 10) jeweils zugeordnete Antriebe (39, 40) so ansteuerbar sind, daß ein an der Rahmenstruktur (4, 5, 6) befestigter Sitz den fahrsitutationsabhängig auftretenden Kräften entgegenwirkend bewegt wird.

2. Einrichtung gemäß Anspruch 1, **dadurch gekennzeichnet, daß** drei Hubelemente (8, 9, 10) vorhanden sind, die unterhalb der Rahmenstruktur (4, 5, 6) dreieckförmig zueinander angeordnet sind.

3. Einrichtung gemäß Anspruch 1, **dadurch gekennzeichnet, daß** drei Hubelemente (8, 9, 10) vorhanden sind, die durch Raumlenker (7, 11) miteinander in Verbindung stehen.

4. Einrichtung gemäß Anspruch 1, **dadurch gekennzeichnet, daß** zur Unterstützung der Hubbewegung der Hubelemente (8, 9, 10) diese jeweils mit Federelementen (17, 18) versehen sind.

5. Einrichtung gemäß Anspruch 4, **dadurch gekennzeichnet, daß** die Federelemente (17, 18) parallel geschaltet sind.

6. Einrichtung gemäß Anspruch 4, **dadurch gekennzeichnet, daß** die Federelemente (17, 18) als Federpakete ausgestaltet sind.

7. Einrichtung gemäß Anspruch 1, **dadurch gekennzeichnet, daß** die Hubelemente (8, 9, 10) teleskopartig bewegbare Rohre (12, 13) umfassen.

8. Einrichtung gemäß Anspruch 7, **dadurch gekennzeichnet, daß** ein an einer Gewindespindel (23) in den Hubelementen (8, 9, 10) verfahrbarer Stellblock (28) durch Federelemente unterstützt ist.

9. Einrichtung gemäß der Ansprüche 1 und 7, **dadurch gekennzeichnet, daß** die Anbindung der Rahmenstruktur (4, 5, 6) an die Hubelemente (8, 9, 10) durch an den Rohren (12) vorgesehene elastische Lagerungselemente (21) erfolgt.

10. Einrichtung gemäß Anspruch 1, **dadurch gekennzeichnet, daß** die Maximalausfahrposition (27) der Hubelemente (8, 9, 10) durch an den teleskopartigen Rohren (12, 13) befestigte Haltebänder (14) begrenzt ist.

11. Einrichtung gemäß Anspruch 1, **dadurch gekennzeichnet, daß** die Rahmenstruktur (4, 5, 6) durch die Hubelemente (9, 10) um ihre Längsachse verkippt wird.

12. Einrichtung gemäß Anspruch 1, **dadurch gekennzeichnet, daß** der Nickwinkel der Rahmenstruktur (4, 5, 6) durch das an der vorderen Querstrebe (6) aufgenommene mittig angeordnete Hubelement (8, 9) beeinflußbar ist.

13. Verfahren zur Verstellung der Rahmenstruktur (4, 5, 6) eines Fahrzeugsitzes, wobei die Rahmenstruktur (4, 5, 6) mittels Antriebsmotoren (40) verstellbar ist, **dadurch gekennzeichnet, daß** Hubelemente (8, 9, 10), die die Rahmenstruktur (4, 5, 6) des Fahrzeugsitzes aufnehmen und in zwei voneinander getrennten Ebenen sphärisch verstellen, sensorabhängig derart angesteuert werden, daß der Fahrzeugsitz fahrsituationsabhängig auftretenden Kräften entgegenwirkend verstellt wird.

14. Verfahren gemäß Anspruch 13, **dadurch gekennzeichnet, daß** bei einer Kurvenfahrt des Fahrzeugs, die den Fahrersitz aufnehmende Rahmenstruktur (4, 5, 6) um die Längsachse zum Kurvenmittelpunkt hin geneigt wird.

15. Verfahren gemäß Anspruch 13, **dadurch gekennzeichnet, daß** bei Verzögerungsphasen ein mittleres Hubelement (8) die Rahmenstruktur (4, 5, 5) um die hinteren Hubelemente (9, 10) nach oben bewegt.

16. Verfahren gemäß Anspruch 13, **dadurch gekennzeichnet, daß** die Hubelemente (8, 9, 10) an das Hydrauliksystem der Servolenkung des Fahrzeuges angeschlossen sind.

## Claims

1. Device for adjusting a vehicle seat, the frame structure (4, 5, 6) of which can be adjusted via driving motors (40) having gear units (39) mounted in front, and the vehicle seat is held on two seat rails (1, 2) which are arranged parallel to each other, **characterized in that** the frame structure (4, 5, 6) of the vehicle seat can be adjusted spherically in two planes, which are separated from each other, by means of lifting elements (8, 9, 10), drives (39, 40) which are assigned in each case to the lifting elements (8, 9, 10) being activatable in such a manner that a seat fastened on the frame structure (4, 5, 6) is moved in an opposing manner to the forces which occur as a function of the driving situation.

2. Device according to Claim 1, **characterized in that** there are three lifting elements (8, 9, 10) which are arranged in a triangular manner with respect to one another below the frame structure (4, 5, 6).

3. Device according to Claim 1, **characterized in that** there are three lifting elements (8, 9, 10) which are connected to one another by spatial links (7, 11).

4. Device according to Claim 1, **characterized in that**, in order to support the lifting movement of the lifting elements (8, 9, 10), the latter are in each case provided with spring elements (17, 18).

5. Device according to Claim 4, **characterized in that** the spring elements (17, 18) are connected in parallel.

6. Device according to Claim 4, **characterized in that** the spring elements (17, 18) are designed as spring assemblies.

7. Device according to Claim 1, **characterized in that** the lifting elements (8, 9, 10) comprise telescopically movable tubes (12, 13).

8. Device according to Claim 7, **characterized in that** an adjusting block (28) which can be moved in the lifting elements (8, 9, 10) on a threaded spindle (23) is supported by spring elements.

9. Device according to Claims 1 and 7, **characterized in that** the frame structure (4, 5, 6) is attached to the lifting elements (8, 9, 10) by elastic mounting elements (21) provided on the tubes (12).

10. Device according to Claim 1, **characterized in that** the maximum extension position (27) of the lifting elements (8, 9, 10) is delimited by retaining straps (14) fastened to the telescopic tubes (12, 13).

11. Device according to Claim 1, **characterized in that** the frame structure (4, 5, 6) is tilted about its longitudinal axis by the lifting elements (9, 10).

12. Device according to Claim 1, **characterized in that** the pitching angle of the frame structure (4, 5, 6) can be influenced by the lifting element (8, 9) which is held on the front transverse strut (6) and is centrally arranged.

13. Method for adjusting the frame structure (4, 5, 6) of a vehicle seat, the frame structure (4, 5, 6) being adjustable by means of driving motors (40), **characterized in that** lifting elements (8, 9, 10), which hold the frame structure (4, 5, 6) of the vehicle seat and adjust it spherically in two planes separated from each other, are activated as a function of a sensor in such a manner that the vehicle seat is adjusted in a manner opposing forces which occur as a function of the driving situation.

14. Method according to Claim 13, **characterized in that**, when the vehicle is cornering, the frame structure (4, 5, 6) holding the driver's seat is inclined about the longitudinal axis towards the central point of the bend.

15. Method according to Claim 13, **characterized in that** a central lifting element (8) moves the frame structure (4, 5, 6) upwards about the rear lifting elements (9, 10) during deceleration phases.

16. Method according to Claim 13, **characterized in that** the lifting elements (8, 9, 10) are connected to the hydraulic system of the power steering of the vehicle.

## Revendications

1. Dispositif pour déplacer un siège de véhicule dont la structure de châssis (4, 5, 6) peut être déplacée par des moteurs d'entraînement (40) avec des unités d'engrenage en amont (39) et dans lequel le siège de véhicule est logé sur deux glissières de siège (1, 2) disposées parallèlement l'une par rapport à l'autre,
**caractérisé en ce que**
la structure de châssis (4, 5, 6) du siège de véhicule peut être déplacée de manière sphérique par des éléments de levage (8, 9, 10) dans deux plans séparés l'un de l'autre, des entraînements (39, 40) associés aux éléments de levage (8, 9, 10) pouvant être commandés de manière à ce qu'un siège fixé sur la structure de châssis (4, 5, 6) soit déplacé en sens inverse par rapport aux forces apparaissant en fonction de la situation de conduite.

2. Dispositif selon la revendication 1,
**caractérisé en ce qu'**
il existe trois éléments de levage (8, 9, 10) disposés sous la structure de châssis (4, 5, 6) en triangle les uns par rapport aux autres.

3. Dispositif selon la revendication 1,
**caractérisé en ce qu'**
il existe trois éléments de levage (8, 9, 10) reliés les uns aux autres par des espaceurs (7, 11).

4. Dispositif selon la revendication 1,
**caractérisé en ce que**
les éléments de levage (8, 9, 10) sont dotés respectivement d'éléments à ressort (17, 18) afin de soutenir leur action de levage.

5. Dispositif selon la revendication 4,
**caractérisé en ce que**
les éléments à ressort (17, 18) sont montés en parallèle.

6. Dispositif selon la revendication 4,
**caractérisé en ce que**
les éléments à ressort (17, 18) sont conçus en tant que blocs ressort.

7. Dispositif selon la revendication 1,
**caractérisé en ce que**
les éléments de levage (8, 9, 10) comprennent des tubes (12, 13) mobiles de type télescopique.

8. Dispositif selon la revendication 7,
**caractérisé en ce qu'**
un bloc de réglage (28) pouvant être déplacé sur une broche filetée (23) dans les éléments de levage (8, 9, 10) est soutenu par des éléments à ressort.

9. Dispositif selon les revendications 1 et 7,
**caractérisé en ce que**
la structure de châssis (4, 5, 6) est rattachée aux éléments de levage (8, 9, 10) par des éléments élastiques de palier (21) prévus sur les tubes (12).

10. Dispositif selon la revendication 1,
**caractérisé en ce que**
la position de sortie maximum (27) des éléments de levage (8, 9, 10) est limitée par des colliers de support (14) fixés sur les tubes (12, 13) de type télescopique.

11. Dispositif selon la revendication 1,
**caractérisé en ce que**
les éléments de levage (9, 10) font pivoter la structure de châssis (4, 5, 6) autour de son axe longitudinal.

12. Dispositif selon la revendication 1,
**caractérisé en ce que**
l'angle d'inclinaison longitudinal de la structure de châssis (4, 5, 6) peut être influencé par l'élément de levage (8, 9) logé et disposé au centre sur le renforcement diagonal (6) avant.

13. Procédé pour déplacer la structure de châssis (4, 5, 6) d'un siège de véhicule, la structure de châssis (4, 5, 6) pouvant être déplacée à l'aide de moteurs d'entraînement (40),
**caractérisé en ce que**
les éléments de levage (8, 9, 10) logeant la structure de châssis (4, 5, 6) du siège de véhicule et se déplaçant de manière sphérique dans deux plans séparés l'un de l'autre, sont commandés en fonction des capteurs de manière à ce que le siège de véhicule soit déplacé en sens inverse des forces apparaissant en fonction de la situation de conduite.

14. Procédé selon la revendication 13,
**caractérisé en ce que**
la structure de châssis (4, 5, 6) logeant le siège de véhicule est inclinée vers le centre du virage autour de l'axe longitudinal lorsque le véhicule se trouve dans un virage.

15. Procédé selon la revendication 13,
**caractérisé en ce qu'**
en phase de décélération un élément de levage (8) central déplace la structure de châssis (4, 5, 6) vers le haut autour des éléments de levage arrière (9, 10).

16. Procédé selon la revendication 13,
**caractérisé en ce que**
les éléments de levage (8, 9, 10) sont raccordés au système hydraulique de la direction assistée du véhicule.
